# EUROPEAN PATENT APPLICATION

(11) **EP 3 672 175 A1**
(43) Date of publication of application: **24.06.2020**
(21) Application number: 18845828.5
(22) Date of filing: 10.08.2018
(51) Int. Cl.: H04L 12/937

(54) **FLOW DIRECTION CONTROL METHOD AND APPARATUS FOR HARDWARE SWITCH, TERMINAL DEVICE, AND STORAGE MEDIUM**

(30) Priority: 14.08.2017 CN 201710692936
(71) Applicant: ZTE Corporation, Shenzhen, Guangdong 518057 (CN)
(72) Inventor: HUANG, Chencheng, Shenzhen Guangdong 518057 (CN)
(74) Representative: Petraz, Gilberto Luigi
(86) International application number: PCT/CN2018/100048
(87) International publication number: WO 2019/034002

(57) **Abstract**

Disclosed is a flow direction control method for a hardware switch, which is externally connected to a unidirectional external-ring circuit. The method comprises: inputting obtained data traffic information into a hardware external-ring circuit; receiving the data traffic information transmitted back by the external-ring circuit; and redirecting the received data traffic information to a corresponding port according to a No. 1 redirection table obtained in advance. In the method, an apparatus, a terminal device and a storage medium disclosed, the received data traffic information is mirrored to a flow-out end of the external-ring circuit, and the data traffic information reenters the hardware switch through a flow-in end of the external-ring circuit. Then, the data traffic information of the flow-in end of the external-ring circuit is simply redirected to a virtual port of the hardware switch, and accordingly, the data traffic information of the hardware switch is transmitted to the virtual port.

## Description

### Cross-reference to Related Applications

This application claims the priority of Chinese patent application CN 201710692936.9, and filed on August 14, 2017, the entirety of which is incorporated herein by reference.

### Field of the Invention

The present disclosure relates to the field of SDN (Software Defined Network) network data communication, but is not limited to a SDN network data communication network, and in particular, to a flow direction control method and apparatus for a hardware switch, a computer device and a storage medium.

### Background of the Invention

The SDN is a new type of network innovation framework in the technical field of current network communication, and is an implementation mode of network virtualization. The core technology of the SDN can be realized by separating a control plane of network hardware equipment (such as a router and a switch, etc.) from a forwarding plane; the control plane is originally proprietary and cannot be randomly changed by the user, and is fully controlled by a supplier who developed them, while in the SDN, the control plane is completely open and under a centralized control (to form a controller), and the controller sends commands and logic back to the forwarding plane of the network hardware equipment. The issued commands and logic are reflected in hierarchical flow tables, which mainly include matching domains, instruction sets, and counters, etc.; when the network data traffic enters a corresponding hardware forwarding device, a corresponding flow table will be matched to complete the corresponding forwarding work. Thus, the flexible control of the network data traffic is realized, and the capability of centralized change is provided, without the need to respectively make device-centric configuration changes on each router or switch and other equipment. The ability to manage the control plane through an open protocol (such as the OpenFlow standard) allows precise changes to the network or equipment, which increases the efficiency and security of network management, and enables the network as a pipeline to become more intelligent and superior.

In the current environment of the network data communication field, what more commonly used is a flow mirroring mode, and a typical mirroring scenario is to mirror the data traffic from a port of a certain physical switch to a certain port of another physical switch, that is, the remote flow mirroring between physical switches. However, it is found in the application that the above-mentioned remote flow mirroring method is unavailable, which greatly limits the application scope of the remote flow mirroring technology in the existing network. For example, the remote flow mirroring technology cannot be normally used in a circuit equipped with certain hardware switches.

### Summary of the Invention

The present disclosure provides a flow direction control method and apparatus for a hardware switch, a terminal device and a storage medium.

According to one aspect of the present disclosure, a flow direction control method for a hardware switch is provided, and the hardware switch is externally connected to a unidirectional external-ring circuit. The method includes: inputting obtained data traffic information into the external-ring circuit; receiving the data traffic information transmitted back by the external-ring circuit; and redirecting the received data traffic information to a corresponding port according to a No. 1 redirection table obtained in advance.

According to a second aspect of the present disclosure, a flow direction control apparatus for a hardware switch is provided, and the hardware switch is externally connected to a unidirectional external-ring circuit. The apparatus includes: an input module, configured to input obtained data traffic information into the external-ring circuit; a transmission module, configured to receive the data traffic information transmitted back by the external-ring circuit; and a redirection module, configured to redirect the received data traffic information to a corresponding port according to a No. 1 redirection table obtained in advance.

According to a third aspect of the present disclosure, a terminal device is provided, including a processor and a memory, wherein the memory is configured to store computer instructions; the processor is configured to run the computer instructions stored by the memory to implement the aforesaid flow direction control method for the hardware switch.

According to a fourth aspect of the present disclosure, a computer readable storage medium is provided, and the computer readable storage medium stores one or more programs, which are executable by one or more processors to implement the aforesaid flow direction control method for the hardware switch.

Through the above technical solution, the received data traffic information is mirrored to a flow-out end of the external-ring circuit, and the data traffic information reenters the hardware switch through a flow-in end of the external-ring circuit. Then, the data traffic information of the flow-in end of the external-ring circuit is simply redirected to a virtual port of the hardware switch, and accordingly, the data traffic information of the hardware switch is transmitted to the virtual port. Moreover, through the above technical solution, the received data traffic information of the upstream switch may also be redirected to the external-ring circuit, and in the process, the destination MAC address of the data traffic information is set to be an MAC address that can be used for broadcasting. Then, the received data traffic information flowing out of the external-ring circuit is forwarded to multiple ports to realize multi-port monitoring and analysis of the data traffic information.

### Brief Description of the Drawings

Fig. 1 is a flow diagram provided by an embodiment of the present disclosure;
Fig. 2 is a structural diagram of remote flow mirroring of a No. 1 hardware switch and a switch for data traffic information listening provided by an embodiment of the present disclosure;
Fig. 3 is a structural diagram of remote flow mirroring of a physical switch and a No. 2 hardware switch provided by an embodiment of the present disclosure;
Fig. 4 is a structural diagram of remote flow mirroring of a No. 1 hardware switch and a No. 2 hardware switch provided by an embodiment of the present disclosure;
Fig. 5 is another flow diagram provided by an embodiment of the present disclosure.

The implementation, functional characteristics and advantages of the purpose of the present disclosure will be further described in combination with embodiments and with reference to the accompanying drawings.

### Detailed Description of Embodiments

It should be understood that the specific embodiments described herein are only used to explain the present disclosure, and are not used to limit the present disclosure.

In the following description, the suffix such as "module", "component" or "unit" for representing an element is used only to facilitate the description of the present disclosure, and it does not have a specific meaning itself. Thus, the "module", "component" or "unit" may be used in a hybrid manner.

In order to facilitate the understanding of the embodiments of the present disclosure, the implementation process of the present disclosure is described below in detail through several specific embodiments.

However, if some hardware switches are carried in the network, the existing local mirroring function in a hardware switch is only designed for two physical ports of the hardware switch itself, and it cannot support mirroring the traffic of a certain physical port to a certain virtual port (here referring to the vxlan tunnel port connected between the two switches) of the switch. Then, it may be impossible to mirror the traffic from one hardware switch to another hardware switch (the traffic cannot directly come out of the vxlan tunnel port of the previous switch), resulting in unavailability of the above-mentioned remote flow mirroring method, which greatly limits the application scope of the remote flow mirroring technology in the existing network. In view of this, an external-ring circuit is set on a hardware switch in the present disclosure, and the external-ring circuit connects two interfaces of the hardware switch through an external circuit outside the hardware switch. Then, the data transmission of the external-ring circuit is used to realize the mirroring of data traffic between the two hardware switches.

A flow direction control method for a hardware switch is provided in an embodiment of the present disclosure. The hardware switch may be a hardware switch configured to interact with data traffic information between hosts. The hardware switch is externally connected to an external-ring circuit, and both the flow-out end and the flow-in end of the external-ring circuit are in communication with the hardware switch. Furthermore, both the flow-out end and the flow-in end are connected to the physical port of the hardware switch, and the hardware switch also takes protective measures on the data traffic information flowing through it, so that the data traffic information can only flow in one direction to prevent the generation of a circuit, and the data traffic information flowing through the external-ring circuit can only flow from the flow-out end of the external-ring circuit to the flow-in end, and cannot flow in the reverse direction.

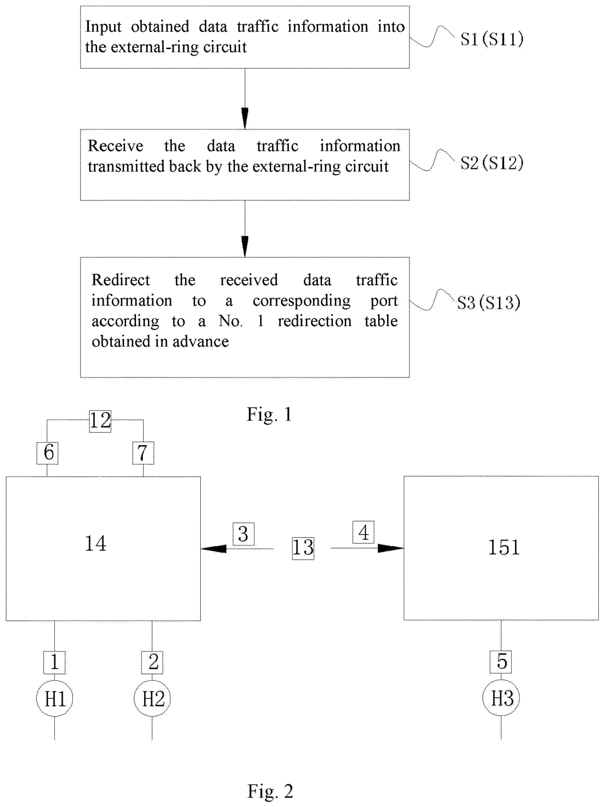

Based on the above-mentioned setting of the external-ring circuit, a flow direction control method for a hardware switch provided in an embodiment of the present disclosure, as shown in Fig. 1, includes the following steps:
At S1, obtained data traffic information is input into the external-ring circuit;
At S2, the data traffic information transmitted back by the external-ring circuit is received; and
At S3, the received data traffic information is redirected to a corresponding port according to a No. 1 redirection table obtained in advance.

In the embodiment of the present disclosure, when receiving the data traffic information, the hardware switch will carry out a directional processing on the received data traffic information. However, in order to realize the flow direction control of the data traffic information, the present disclosure redirects the received data traffic information by utilizing a redirection table obtained in advance.

The No. 1 redirection table may include:
a matching field and a forwarding instruction; the forwarding instruction may correspond to a forwarding address and the like.

Thus, the matching field may include: one or more fields of an ingress interface, an egress port, a keyword of the information, a source address and a destination address. In step S3, a certain attribute of the data traffic information received from the external-ring circuit is matched with the matching field, and then a forwarding instruction corresponding to the matched matching field is selected to forward the data traffic information.

For example, an interface of the external-ring circuit is set to be a predetermined interface; if a certain piece of data traffic information enters from an ingress port of the external-ring circuit, the matching field may be matched through matching of the port number and then be forwarded to the remote switch to realize the data traffic information mirroring of the remote switch.

An expanded description of the above method steps is made as below:
In an embodiment of the present disclosure, inputting obtained data traffic information into the external-ring circuit specifically includes:
Firstly, the hardware switch needs to obtain data traffic information of the host. After obtaining the data traffic information, the hardware switch will send the data traffic information to another host, and meanwhile, the hardware switch mirrors the data traffic information to the external-ring circuit. Specifically, the hardware switch mirrors the data traffic information to a flow-out end of the external-ring circuit, so that the data traffic information is transmitted toward the flow-in end in the external-ring circuit.

In an embodiment of the present disclosure, receiving the data traffic information transmitted back by the external-ring circuit specifically includes:
the data traffic information in the external-ring circuit will be transmitted from the flow-in end of the external-ring circuit back to the hardware switch, and the hardware switch will receive the data traffic information transmitted back by the external-ring circuit.

In an embodiment of the present disclosure, redirecting the received data traffic information to a corresponding port according to a No. 1 redirection table obtained in advance may include:
in this embodiment, the SDN controller will issue the No. 1 redirection table to the hardware switch in advance.

After receiving the data traffic information transmitted back from the flow-in end of the external-ring circuit, the hardware switch uses an indication of the No. 1 redirection table to redirect the received data traffic information to a virtual port of the hardware switch, and the virtual port is connected to a virtual extended local area network forwarding tunnel.

In the prior art, the input port of the virtual extended local area network forwarding tunnel between the switches (hardware switches or physical switches) is a virtual port, and the mirroring function of the hardware switch itself can only mirror the data traffic information to its own physical port, but the redirection function of the hardware switch itself has no limitation on the destination port type of the redirection, which can be either a physical port or a virtual port.

Thus, through the above technical solution, it is possible to mirror only the data traffic information of the host to the flow-out end of the external-ring circuit, and the data traffic information reenters the hardware switch through the flow-in end of the external-ring circuit, and then the data traffic information of the flow-in end of the external-ring circuit is simply redirected to a virtual port of the hardware switch, and accordingly, the data traffic information of the hardware switch is transmitted to the virtual port. When two hardware switches are connected, the data traffic information on one hardware switch may be forwarded to the other hardware switch through a virtual extended local area network forwarding tunnel.

The method described in this embodiment is applied to a system architecture including a No. 1 hardware switch 14 capable of performing the above-mentioned traffic control and a hardware switch 151 for traffic listening, and the system architecture can be seen in Fig. 2, but is not limited to Fig. 2. Fig. 2 is a structural diagram of remote flow mirroring of a No. 1 hardware switch and a switch for data traffic information listening.

According to Fig. 2, the No. 1 hardware switch 14 is just the hardware switch described in steps S1 to S3. The No. 1 hardware switch 14 obtains data traffic information from a host H1 through a port 1; the No. 1 hardware switch 14 transmits data traffic information to a host H2 through a port 2, and meanwhile, the No. 1 hardware switch 14 mirrors the data traffic information to a port 6 to enter its external-ring circuit 12 to form data traffic information. The data traffic information flows into the No. 1 hardware switch 14 through a port 7, where the port 6 and the port 7 are the flow-out end and flow-in end of the external-ring circuit 12 respectively. Under the indication of the No. 1 redirection table, the data traffic information flowing in from the port 7 is redirected to a port 3, and the port 3 is a virtual port. Thus, through the above technical solution, it is possible to mirror only the data traffic information of the host to the flow-out end of the external-ring circuit, and the data traffic information reenters the No. 1 hardware switch 14 through the flow-in end of the external-ring circuit, and then the data traffic information of the flow-in end of the external-ring circuit is simply redirected to a virtual port of the No. 1 hardware switch 14, and accordingly, the data traffic information of the hardware switch is transmitted to the virtual port. Certainly, after the data traffic is redirected to the virtual port, it is sent to a hardware switch 151 through the virtual port.

A flow direction control method for a hardware switch is provided in an embodiment of the present disclosure.

As shown in Fig. 1, an embodiment of the present disclosure provides a flow direction control method for a hardware switch, and the hardware switch is used to listen on and analyze the data traffic information transmitted by an upstream switch (a hardware switch or a physical switch). Moreover, the upstream switch (a hardware switch or a physical switch) is connected with the hardware switch to achieve remote flow mirroring between the two, thereby achieving a multi-port listening and analysis of the data traffic information simultaneously. The hardware switch is externally connected to an external-ring circuit, and both the flow-out end and the flow-in end of the external-ring circuit are in communication with the No. 2 hardware switch. Furthermore, both the flow-out end and the flow-in end are connected to the physical port of the hardware switch, and the hardware switch also takes protective measures on the data traffic information flowing through it, so that the data traffic information can only flow in one direction to prevent the generation of a circuit, and the data traffic information flowing through the external-ring circuit can only flow from the flow-out end of the external-ring circuit to the flow-in end, and cannot flow in the reverse direction.

Based on the above-mentioned setting of the external-ring circuit, a flow direction control method for a hardware switch provided in an embodiment of the present disclosure, as shown in Fig. 1, includes the following steps:
At S11, obtained data traffic information is input into the external-ring circuit;
At S12, the data traffic information transmitted back by the external-ring circuit is received; and
At S13, the received data traffic information is redirected to a corresponding port according to a No. 1 redirection table obtained in advance.

An expanded description of the above method steps is made as below:
In an embodiment of the present disclosure, inputting obtained data traffic information into the external-ring circuit may include:
The SDN controller issues a No. 1 redirection table, a group table and a No. 2 redirection table to the hardware switch. The hardware switch receives the data traffic information transmitted by an upstream switch (a hardware switch or a physical switch), and sets, through the No. 2 redirection table, a destination MAC address of the received data traffic information sent by an upstream switch to be an MAC address that can be used for broadcasting, and moreover redirects, through the No. 2 redirection table, the data traffic information of the MAC address reset to be used for broadcasting to the external-ring circuit.

In an embodiment of the present disclosure, receiving the data traffic information transmitted back by the external-ring circuit specifically includes:
Through the external-ring circuit, the data traffic information of the MAC address reset to be used for broadcasting is transmitted back to the hardware switch along with the external-ring circuit, and thus the hardware switch will receive the data traffic information of the MAC address that can be used for broadcasting transmitted back by the external-ring circuit.

A probe virtual machine for listening is often connected under a destination port of the hardware switch for listening and analysis, but the probe virtual machine only receives the unicast message with the destination MAC address being its own or the broadcast message with the destination MAC address being full F. Thus, in this embodiment, the destination MAC address of the received data traffic information sent by the upstream switch is set to be an MAC address that can be used for broadcasting, which can be used to facilitate the work of the probe virtual machine.

In an embodiment of the present disclosure, redirecting the received data traffic information to a corresponding port according to a No. 1 redirection table obtained in advance may include:
Firstly, one or more listening ports need to be determined according to a group table obtained in advance; and then based on the group table and according to the MAC address of the data traffic information, the hardware switch sends the data traffic information transmitted back to the hardware switch to the listening ports, that is, the hardware switch redirects the received data traffic information to a corresponding listening port.

Through the No. 1 redirection table, the data traffic information transmitted back to the hardware switch is redirected to the corresponding one or more listening ports, which are determined by a group table obtained in advance, and each of which receives the same data traffic information; moreover, the same data traffic information received by each of the listening ports is a broadcast message, that is, respective listening ports receive the same traffic information of an MAC address that can be used for broadcasting. In this way, the hardware switch realizes a multi-port listening and analysis of the data traffic information so as to achieve a mirror gateway function. Then, the data traffic information of each listening port is forwarded. In some embodiments, the group table is embedded in the No. 1 redirection table.

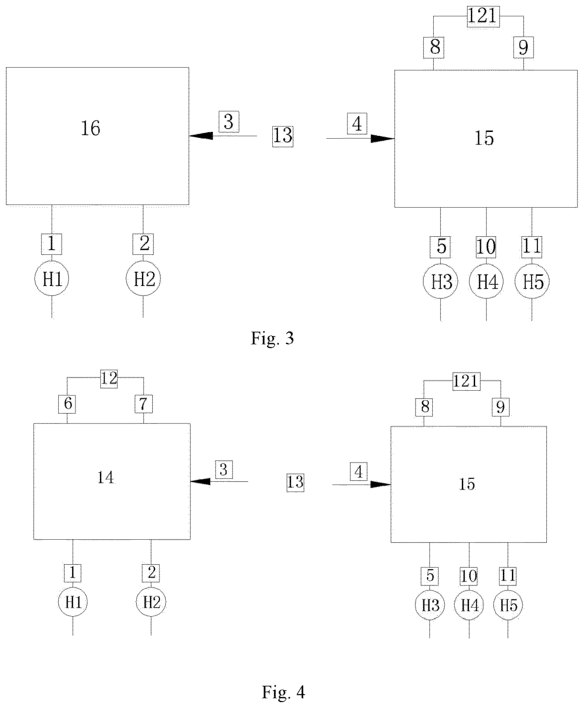

In this embodiment, in order to distinguish a hardware switch, the switch is named as a No. 2 hardware switch. Fig. 4 is a structural diagram of remote flow mirroring of a No. 1 hardware switch 14 and a No. 2 hardware switch 15. In order to better explain the implementation process of the method described in this embodiment, the method described in this embodiment is illustrated below with reference to Fig. 4 and a specific application example.

The method described in this embodiment is applied to a No. 1 hardware switch 14 capable of performing flow control and a No. 2 hardware switch 15 for traffic listening in the above method.

According to Fig. 4, the No. 2 hardware switch 15 is just the hardware switch described in steps S11 to S13. The No. 2 hardware switch 15 receives from a port 4 the data traffic information transmitted by the No. 1 hardware switch 14 (the upstream switch), and the transmission mode of the data traffic information may be selected as a virtual extended local area network forwarding tunnel 13. The received data traffic information is redirected to a port 8 according to the table item contents of the No. 2 redirection table, and during this process, the destination MAC address of the data traffic information is reset to be an MAC address that can be used for broadcasting under the action of the No. 2 redirection table.

The data traffic information enters a No. 2 external-ring circuit 121 from a port 8, and flows into the No. 2 hardware switch 15 from a port 9. According to the group table obtained in advance, a port 5, a port 10 and a port 11 are determined; under the indication of the No. 1 redirection table, the data traffic information is broadcast to the port 5, the port 10 and the port 11, and the data traffic information of the three ports are same. In this way, the No. 2 hardware switch 15 realizes a multi-port listening and analysis of the data traffic information. Then, according to the group table embedded in the No. 1 redirection table, the data traffic information of the port is forwarded, that is, the respective data traffic information is forwarded to the corresponding host H3, host H4 and host H5 through the port 5, the port 10 and the port 11. In some embodiments, the group table is embedded in the No. 1 redirection table.

In addition, the physical switch supports mirroring the data traffic information of a certain physical port to a certain virtual port of the physical switch connected to a virtual extended local area network forwarding tunnel, and then transmits the data traffic information to a downstream switch (a physical switch or a hardware switch) for listening and analysis through the virtual port and the virtual extended local area network forwarding tunnel.

In this embodiment, Fig. 3 is a structural diagram of remote flow mirroring of a physical switch 16 and a No. 2 hardware switch 15. As shown in Fig. 3, the physical switch 16 may be connected to the No. 2 hardware switch 15, and the two transmit data through the virtual extended local area network forwarding tunnel, where the physical switch 16 serves as an upstream switch; the No. 2 hardware switch 15 serves as a downstream switch; the remote flow mirroring function of the physical switch 16 and the No. 2 hardware switch 15 is achieved to be adapted to the remote flow mirroring scenario between the physical switch and the hardware switch. Certainly, Fig. 4 is a structural diagram of remote flow mirroring of a No. 1 hardware switch 14 and a No. 2 hardware switch 15. As shown in Fig. 4, the No. 1 hardware switch 14 may also be connected to the No. 2 hardware switch 15, and the two transmit data through the virtual extended local area network forwarding tunnel, where the No. 1 hardware switch 14 serves as an upstream switch; and the No. 2 hardware switch 15 serves as a downstream switch. As shown in Fig. 2, for the No. 1 hardware switch 14, it may be connected to a hardware switch 151 equipped with a listening port to achieve the remote flow mirroring function between the two.

In this way, the adaptability of the hardware switch is improved in the complicated deployment of the existing network environment.

A flow direction control apparatus for a hardware switch is further provided in an embodiment of the present disclosure.

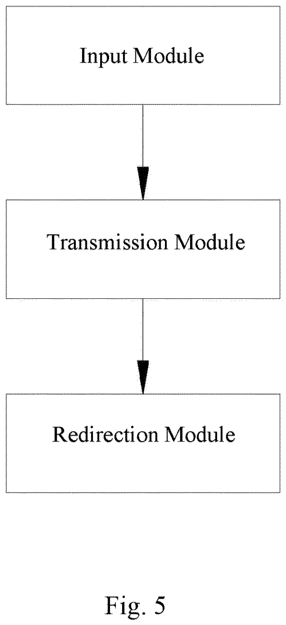

Fig. 5 is a flow diagram of this embodiment. As shown in Fig. 5, the embodiment of the present disclosure further provides a flow direction control apparatus for a hardware switch, which is externally connected to a unidirectional external-ring circuit, and the apparatus includes:
an input module, which is configured to input obtained data traffic information into the external-ring circuit;
a transmission module, which is configured to receive the data traffic information transmitted back by the external-ring circuit; and
a redirection module, which is configured to redirect the received data traffic information to a corresponding port according to a No. 1 redirection table obtained in advance.

In some embodiments, said inputting obtained data traffic information into the external-ring circuit includes:
a mirroring unit, which is configured to mirror the received data traffic information sent by a host to the external-ring circuit.

In some embodiments, said redirecting the data traffic information transmitted back to the hardware switch to a corresponding port includes:
a virtual port unit, which is configured to redirect, according to the No. 1 redirection table, the data traffic information transmitted back to the hardware switch to a virtual port of the hardware switch, which is connected to a virtual extended local area network forwarding tunnel.

In some embodiments, said inputting obtained data traffic information into the external-ring circuit includes:
a reset unit, which is configured to set, according to a No. 2 redirection table obtained in advance, a destination MAC address of the received data traffic information sent by an upstream switch to be an MAC address that can be used for broadcasting, and then redirect it to the external-ring circuit.

In some embodiments, said redirecting the data traffic information transmitted back to the hardware switch to a corresponding port includes:
a listening port determination module, which is configured to determine one or more listening ports according to a group table obtained in advance; and
a listening port module, which is configured to send, according to the MAC address of the data traffic information, the data traffic information transmitted back to the hardware switch to the listening ports.

In some embodiments, a type of the upstream switch is a physical switch or a hardware switch.

In this embodiment, the received data traffic information is mirrored to a flow-out end of the external-ring circuit through a transmission module, and the data traffic information reenters the hardware switch through a flow-in end of the external-ring circuit. Then, the data traffic information of the flow-in end of the external-ring circuit is simply redirected to a virtual port of the hardware switch through a redirection module, and accordingly, the data traffic information of the hardware switch is transmitted to the virtual port. When two hardware switches are connected, the data traffic information on one hardware switch can be forwarded to the other hardware switch through a virtual extended local area network forwarding tunnel.

An embodiment of the present disclosure further provides a terminal device, which may include:
a terminal device, including a processor and a memory, wherein the memory is configured to store computer instructions; the processor is connected to the memory, and is configured to run the computer instructions stored by the memory to implement the flow direction control method for the hardware switch above.

Since the flow direction control method for the hardware switch has been described in detail in the above-mentioned embodiments, the implementation process of the method is not repeatedly described in this embodiment.

In some embodiments, the terminal device may include the above-mentioned hardware switch, and the memory and processor may be components of the hardware switch. For example, the memory may be a memory of the hardware switch, such as a flash memory, a hard disk, and the like. The processor may be a central processing unit, a micro-processing unit, and the like on a switching chip of the hardware switch. The hardware switch also includes multiple ports that can be used for data forwarding. At least two ports of the hardware switch may build the external-ring circuit. In some embodiments, the external-ring circuit is a unidirectional circuit, and the two ports in the unidirectional circuit may be referred to as a first port and a second port, respectively; the data traffic information can only enter the first port from an ingress port and enter the external-ring circuit, and flow out of the external-ring circuit from the second port; or in other words, the data traffic information can only flow out of the hardware switch from the first port, and reenter the hardware switch from the second port after passing through the external-ring circuit.

An embodiment of the present disclosure further provides a computer readable storage medium, which may include:
the computer readable storage medium storing one or more programs, which are executable by one or more processors to implement the flow direction control method for the hardware switch above. The computer readable storage medium may be a non-transitory storage medium

Since the flow direction control method for the hardware switch has been described in detail in the above-mentioned embodiments, the implementation process of the method is not repeatedly described in this embodiment.

It should be noted that, in this text, the terms "comprise", "include", or any other variants thereof are intended to cover a non-exclusive inclusion, so that a process, a method, an article or a device including a series of elements includes not only those elements, but also other elements not explicitly listed, or elements inherent to such a process, a method, an article, or a device. Without more restrictions, an element limited by a phrase "including a ..." does not exclude that other identical elements also exist in the process, the method, the article or the device including the element.

The above-mentioned serial numbers of the embodiments in the present disclosure are merely for description, and do not represent the superiority or inferiority of the embodiments.

Through the description of the above embodiments, those skilled in the art can clearly understand that the methods in the above embodiments can be implemented by means of software plus a necessary universal hardware platform, and of course, can also be implemented by hardware, but in many cases, the former is a better implementation mode. Based on such an understanding, the technical solution of the present disclosure, in essence or the part contributing to the prior art, can be embodied in the form of a software product, and the computer software product is stored in a storage medium (such as an ROM/RAM, a magnetic disk, an optical disk), and includes some instructions for causing a terminal (which may be a mobile phone, a computer, a server, an air conditioner, or a network device, etc.) to execute the methods described in respective embodiments of the present disclosure.

The embodiments of the present disclosure have been described above with reference to the accompanying drawings, but the present disclosure is not limited to the specific implementation modes above; the specific implementation modes above are only exemplary and not restrictive. Under the teaching of the present disclosure, those of ordinary skill in the art can make many forms without departing from the aims of the present disclosure and the scope of the appended claims, and these all fall into the protection of the present disclosure.

## Claims

1. A flow direction control method for a hardware switch, which is externally connected to a unidirectional external-ring circuit, the method comprising:
inputting obtained data traffic information into the external-ring circuit;
receiving the data traffic information transmitted back by the external-ring circuit; and
redirecting the received data traffic information to a corresponding port according to a No. 1 redirection table obtained in advance.

2. The method according to claim 1, wherein said inputting obtained data traffic information into the external-ring circuit comprises:
mirroring the received data traffic information sent by a host to the external-ring circuit.

3. The method according to claim 2, wherein said redirecting the data traffic information transmitted back to the hardware switch to a corresponding port comprises:
redirecting, according to the No. 1 redirection table, the data traffic information transmitted back to the hardware switch to a virtual port of the hardware switch, which is connected to a virtual extended local area network forwarding tunnel.

4. The method according to claim 1, wherein said inputting obtained data traffic information into the external-ring circuit comprises:
setting, according to a No. 2 redirection table obtained in advance, a destination MAC address of the received data traffic information sent by an upstream switch to be an MAC address that can be used for broadcasting, and then redirecting it to the external-ring circuit.

5. The method according to claim 4, wherein said redirecting the data traffic information transmitted back to the hardware switch to a corresponding port comprises:
determining one or more listening ports according to a group table obtained in advance; and
sending, according to the MAC address of the data traffic information, the data traffic information transmitted back to the hardware switch to the listening ports.

6. The method according to claim 4, wherein a type of the upstream switch is a physical switch or a hardware switch.

7. A flow direction control apparatus for a hardware switch, which is externally connected to a unidirectional external-ring circuit, the apparatus comprising:
an input module, configured to input obtained data traffic information into the external-ring circuit;
a transmission module, configured to receive the data traffic information transmitted back by the external-ring circuit; and
a redirection module, configured to redirect the received data traffic information to a corresponding port according to a No. 1 redirection table obtained in advance.

8. The apparatus according to claim 7, wherein said to input obtained data traffic information into the external-ring circuit comprises:
a mirroring unit, configured to mirror the received data traffic information sent by a host to the external-ring circuit.

9. The apparatus according to claim 8, wherein
a virtual port unit is configured to redirect, according to the No. 1 redirection table, the data traffic information transmitted back to the hardware switch to a virtual port of the hardware switch, which is connected to a virtual extended local area network forwarding tunnel.

10. The apparatus according to claim 7, wherein a reset unit is configured to set, according to a No. 2 redirection table obtained in advance, a destination MAC address of the received data traffic information sent by an upstream switch to be an MAC address that can be used for broadcasting, and then redirect it to the external-ring circuit.

11. The apparatus according to claim 10, wherein a listening port determination module is configured to determine one or more listening ports according to a group table obtained in advance; and
a listening port module is configured to send, according to the MAC address of the data traffic information, the data traffic information transmitted back to the hardware switch to the listening ports.

12. The apparatus according to claim 10, wherein a type of the upstream switch is a physical switch or a hardware switch.

13. A terminal device, comprising a processor and a memory, wherein
the memory is configured to store computer instructions; the processor is connected to the memory, and is configured to run the computer instructions stored by the memory to implement a flow direction control method for a hardware switch according to any one of claims 1 to 6.

14. A computer readable storage medium, storing one or more programs, which are executable by one or more processors to implement a flow direction control method for a hardware switch according to any one of claims 1 to 6.
